# EUROPÄISCHE PATENTSCHRIFT

(11) **EP 0 816 623 B1**
(45) Veröffentlichungstag und Bekanntmachung des Hinweises auf die Patenterteilung: **12.02.2003**
(21) Anmeldenummer: 97106502.4
(22) Anmeldetag: 19.04.1997
(51) Int. Cl.: E06B 3/96, E04B 2/88, F16B 7/18

(54) **Profilelement zum Aufbau von Rahmen und Fassadenkonstruktionen**
Profile element for constructing door or window frames and façade constructions
Elément profilé pour la construction des dormants et des constructions de façade

(30) Priorität: 27.06.1996 DE 19625708
(43) Veröffentlichungstag der Anmeldung: 07.01.1998
(73) Patentinhaber: NORSK HYDRO ASA, 0257 Oslo 2 (NO)
(72) Erfinder: Schulz, Harald, Dr., 86381 Krumbach (DE)
(74) Vertreter: Dziewior, Joachim, Dipl.-Phys. Dr.

(56) Entgegenhaltungen:
- EP-A- 0 616 092
- DE-A- 1 775 811
- DE-A- 2 018 015
- DE-A- 3 925 197
- DE-U- 9 306 516
- DE-U- 29 500 286
- FR-A- 2 520 409
- GB-A- 835 915
- US-A- 2 711 138

## Beschreibung

Die Erfindung betrifft eine Profilelement und Schraube enthaltende Montageanordnung zum Aufbau von Türrahmen, Fensterrahmen, Fassadenkonstruktionen in Pfosten-/Riegelbauweise und dergleichen.

Derartige Profilelemente ermöglichen es, ohne besondere Vorkehrungen, also insbesondere ohne spezielle Einbringung von Bohrungen, in das Profil Befestigungsschrauben einzudrehen, indem diese an der jeweils erforderlichen Stelle am Schraubkanal angesetzt und dort eingeschraubt werden. Bei bekannten Ausführungsformen besitzt der nutförmig ausgebildete Schraubkanal planparallele Wände, so daß die Schraube mit ihrem Außengewinde einen korrespondierenden Gewindebereich in die Nutwand einschneidet. Diese Art der Befestigung erfordert nur ein niedriges Eindrehmoment, verlangt jedoch relativ große Einschraubtiefen, um einen ausreichenden Halt der Schraube in der Nut zu gewährleisten. In Längsrichtung des Schraubkanals senkrecht zur Schraubenachse wird hierdurch jedoch keine Tragfähigkeit erreicht.

Wird dagegen eine kleine Einschraubtiefe gewünscht, so muß für die Schraube in das Hohlprofil zuvor an der gewünschten Stelle eine Bohrung eingebracht werden, in die die Schraube dann vorzugsweise selbstschneidend eingedreht wird. Da hierbei die Befestigungsschraube über ihren gesamten Umfang von dem Profil umschlossen wird, sind zwar einerseits ein fester Halt selbst bei einer kleinen Einschraubtiefe und eine hohe Tragfähigkeit senkrecht zur Schraubenachse gegeben, andererseits erfordert dies jedoch ein hohes Eindrehmoment und insbesondere zuvor die Anbringung der - an der richtigen Stelle genau zu positionierenden - Bohrung.

Aus der DE-U-93 06 516 ist eine Rahmenkonstruktion mit einem Profilelement bekannt, bei welchem zur Bildung von wahlweise zu schaffenden Einschrauböffnungen für in einen Schraubkanal einzudrehende Befestigungsschrauben in Form von selbstschneidenden, gewindefurchenden Schrauben den Schraubkanal seitlich begrenzende Nutwände vorgesehen sind. Dabei findet eine Schraube Verwendung, deren Spitze als Zentrierbohrer ausgebildet ist. Dadurch erzeugt die Schraube die zu ihrer Montage erforderlichen Bohrungen selbst; allerdings macht dies die Verwendung solch aufwendiger gestalteter Schrauben notwendig.

Ferner ist aus der DE-U-295 00 286 eine Profilelement und Schraube enthaltende Montageanordnung zum Aufbau von Fassadenkonstruktionen bekannt, wobei dieses Profilelement zur Bildung von wahlweise zu Schaffenden Einschrauböffnungen für in einen trapezformigen Schraubkanal einzudrehende Befestigungsschrauben in Form von gewindefurchenden Schrauben mit den Schraubkanal seitlich begrenzenden Nutwänden versehen ist, wobei die Breite des Schraubkanals etwa dem Kerndurchmesser der Schraube entspricht.

Der Erfindung liegt die Aufgabe zugrunde, ein Profilelement der eingangs genannten Art zu schaffen, das die Vorteile beider Befestigungsarten miteinander verknüpft, also keine Vorarbeiten erforderlich macht, auch bei einem relativ niedrigen Eindrehmoment mit einer kurzen Einschraubtiefe auskommt und dennoch ausreichend hohe Tragfähigkeit in Längsrichtung des Schraubkanals und quer dazu sicherstellt.

Diese Aufgabe wird nach einer ersten Ausgestaltung der Erfindung gelöst durch eine Montageanordnung, bei der das Profilelement zur Bildung von wahlweise zu schaffenden Einschrauböffnungen für in einen Schraubkanal einzudrehende Befestigungsschrauben in Form von vorzugweise selbstschneidenden bzw. gewindefurchenden Schrauben mit den Schraubkanal seitlich begrenzenden Nutwänden versehen ist und an beiden Nutwänden im Bereich der Nutöffnung zwei vorstehende, paarweise einander zugeordnete, die lichte Öffnungsbreite verengende Leisten angeordnet sind, die beim Eindrehen der Schraube zur Schaffung der Einschrauböffnung im Einschraubbereich unter Bildung je eines Umschlingungsbereichs umgeformt werden, wobei der Umschlingungsbereich einen Teilbereich der Mantelfläche der Schraube formschlüssig umgreift und wobei mit Abstand vom Nutboden ein zweites Paar von Leisten angeordnet ist.

Der durch die Erfindung erreichte Vorteil besteht im wesentlichen darin, daß sich durch die Leisten eine ausreichende Fixierung der Befestigungsschraube bezüglich der Längsrichtung des Profilelementes, also eine ausreichende Schubtragfähigkeit ergibt und darüber hinaus die Schraube über einen vergleichsweise vergrößerten Umfangsbereich zangenartig umschlossen wird, wodurch auch bei kleiner Einschraubtiefe ein ausreichender Halt in Axialrichtung gewährleistet ist. Gleichwohl führt dieser Aufbau zu einem vergleichsweise geringeren Eindrehmoment beim Einschrauben der Befestigungsschraube. Im Ergebnis besteht bei Fassadenkonstruktionen aus Pfosten- und Riegelprofilen die Möglichkeit, das Riegelprofil an jeder beliebigen Stelle ohne besondere Vorkehrungen im Pfosten, also insbesondere ohne die Einbringung von Bohrungen montieren zu können.

Um auch höheren Belastungen in Längsrichtung des Schraubkanals standzuhalten, sieht die Erfindung vor, daß im Bereich des Nutbodens ein zweites Paar von Leisten angeordnet ist. Dadurch wird die Schraube an ihrem kopfseitigen sowie an ihrem freien Ende von den Leisten umschlossen, wodurch sich eine deutlich erhöhte Festigkeit der Schraubverbindung vor allem auch in Längsrichtung des Schraubkanals ergibt. Für den Einsatz sogenannter Stanzschrauben ist es dann weiter von Vorteil, wenn der lichte Abstand des zweiten Paares der Leisten geringer ist als der des ersten Paares.

Um beim Eindrehen der Schraube eine bessere Führung bzw. Zentrierung zu erreichen, ist im Rahmen der Erfindung vorgesehen, daß die Leisten an ihrer in Einschraubrichtung der Schraube vorderen Kante in der Art einer Phase abgeschrägt sind.

Häufig wird es ausreichend sein, wenn die Schraube nur im Umschlingungsbereich der Leisten gehalten ist. Dann kann der Abstand der Nutwände gleich oder größer als der Durchmesser der Schraube sein.

Wird jedoch ein stärkerer Halt, insbesondere auch in axialer Richtung der Schraube gewünscht, so wird die Aufgabe nach einer zweiten Ausgestaltung der Erfindung gelöst durch ein Montageelement, bei das Profilelement zur Bildung von wahlweise zu schaffenden Einschrauböffnungen für in einen Schraubkanal einzudrehende Befestigungsschrauben in Form von gewindefurchenden Schrauben mit den Schraubkanal seitlich begrenzenden Nutwänden versehen ist und an beiden Nutwänden im Bereich der Nutöffnung zwei vorstehende, paarweise einander zugeordnete, die lichte Öffnungsbreite verengende Leisten angeordnet sind, die beim Eindrehen der Schraube zur Schaffung der Einschrauböffnung im Einschraubbereich unter Bildung je eines Umschlingungsbereichs umgeformt werden, wobei der Umschlingungsbereich einen Teilbereich der Mantelfläche der Schraube formschlüssig umgreift und wobei der Abstand der Nutwände dem Kerndurchmesser der Schraube entspricht.

Auf diese Weise ist eine erhöhte Festigkeit der Schraube in der Nut gegeben, indem diese selbstschneidend oder gewindefurchend in der Nutwand Halt findet.

Schließlich besteht noch die Möglichkeit, daß die Aufnahmenut im Bereich ihres Nutbodens eine verringerte Breite zum Eindrehen einer endseitig konisch ausgebildeten Schraube aufweist.

Im folgenden wird die Erfindung an in der Zeichnung dargestellten Ausführungsbeispielen näher erläutert, wobei jeweils die Teilfigur a) den unverschraubten, die Teilfigur b) den verschraubten Zustand im Querschnitt und die Teilfigur c) eine Draufsicht auf das Profil wiedergeben; es zeigen:
- Fig. 1: eine nur teilweise Darstellung z.B. eines Pfostenprofils mit einem daran mittels einer Befestigungsschraube anschließbaren Riegelprofil,
- Fig. 2: den Gegenstand nach Fig. 1, jedoch mit abgefaster Kante,
- Fig. 3: eine Ausführungsform mit erhöhter Festigkeit der Schraubverbindung,
- Fig. 4: eine der Fig. 3 ähnliche Ausführungsform,
- Fig. 5: eine weitere alternative Ausgestaltung der Erfindung.

Das in der Zeichnung lediglich als Ausführungsbeispiel unvollständig dargestellte Profilelement ist beispielsweise Teil eines Pfostens 1, der eine einen Einschraubkanal bildende Aufnahmenut 2 aufweist, die zum Anschluß etwa eines Riegels 3 eine Einschrauböffnung für eine Befestigungsschraube 4 bildet. Diese Einschrauböffnung wird seitlich von den beiden Wänden der Aufnahmenut 2 begrenzt. Die Aufnahmenut 2 ermöglicht es, das Riegelprofil 3 an jeder beliebigen Stelle ohne besondere Vorkehrungen im Pfosten 1 zu montieren; es ist also insbesondere nicht erforderlich, zuvor Bohrungen einzubringen.

Um einen ausreichenden Halt der Befestigungsschraube 4 in der Aufnahmenut 2 bei einerseits relativ kurzer Einschraubtiefe und andererseits einem relativ geringen Eindrehmoment zu erreichen, ist an den Nutwänden im Bereich der Nutöffnung ein Paar von gegeneinander vorstehenden Leisten 5 angeordnet. Zur Bildung der Einschrauböffnung verformen sich diese Leisten 5 beim Eindrehen der Schraube 4 im Einschraubbereich, so daß die Schraube 4 im Bereich der so gebildeten Umschlingungsbereiche formschlüssig in der Art einer Zange umgriffen wird, wie sich dies jeweils aus der Teilfig. b) ergibt.

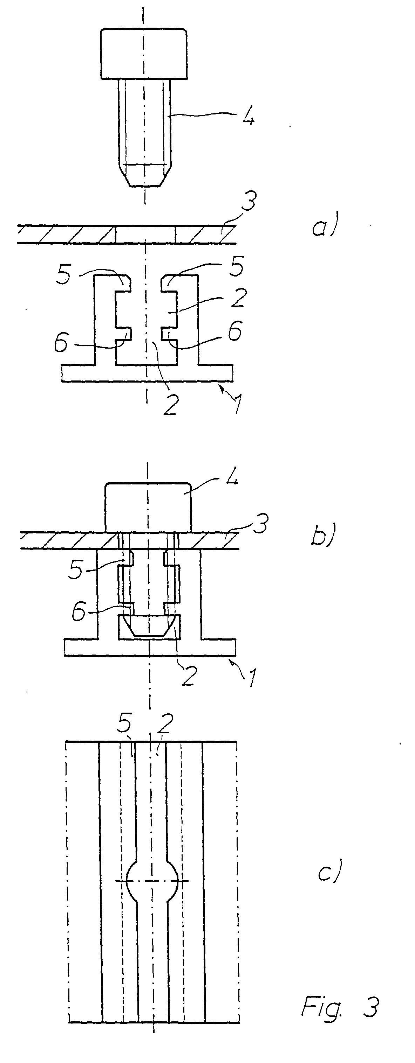

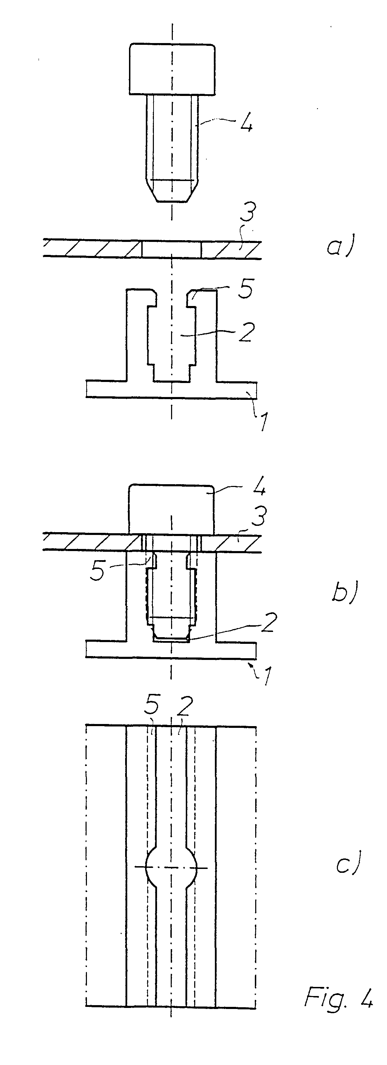

Bei höheren Belastungen, insbesondere quer zur Längsachse der Schraube 4, nämlich in Längsrichtung des Schraubkanals, also der Aufnahmenut 2, ist es gemäß Darstellung in Fig. 3 zweckmäßig, wenn mit Abstand vom Nutboden ein zweites Paar von Leisten 6 angeordnet ist, wodurch die Befestigungsschraube 4 auch im Bereich ihres freien Endes entsprechenden Halt in der Aufnahmenut 2 findet. Hierdurch können erheblich höhere Kräfte von der Schraube aufgenommen werden. Dies läßt sich gemäß Fig. 4 auch dadurch erreichen, daß der Nutboden eine geringere Breite aufweist und zur Befestigung eine Schraube mit konischem Ende, z.B. in der Art einer Taptite-Schraube, verwendet wird.

Um das Eindrehen bzw. Ansetzen der Schraube zu erleichtern, sind die Leisten 5 bzw. 6 an ihrer in Einschraubrichtung der Schraube vorderen Kante in der Art einer Phase abgeschrägt.

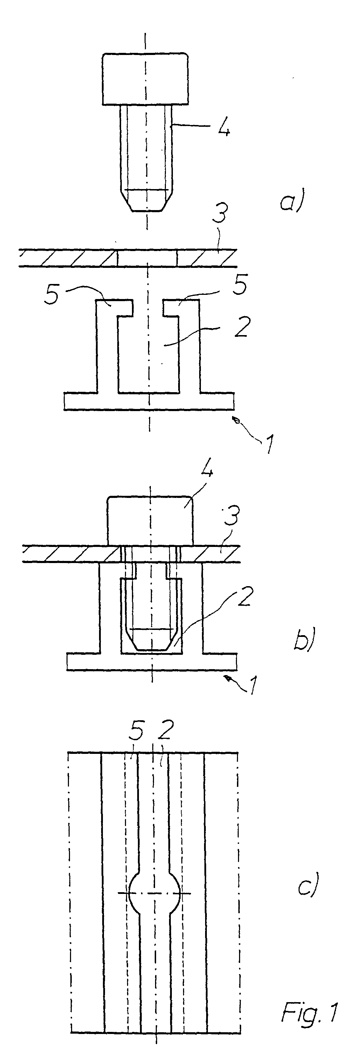

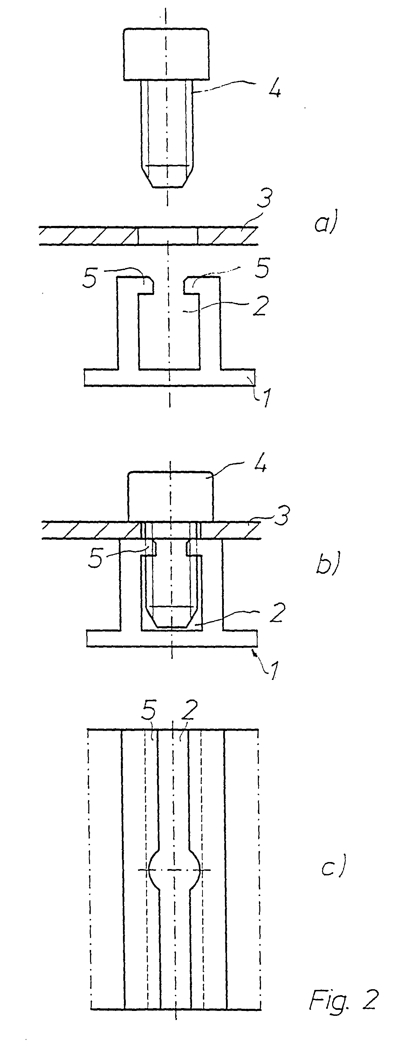

In den in den Fig. 1 bis 3 dargestellten Ausführungsbeispielen ist der Abstand der Nutwände so gewählt, daß er größer als der Kerndurchmesser der Schraube 4 ist. Dies reicht bei geringeren Belastungen häufig aus und ergibt ein geringeres Eindrehmoment. Bei der in der Figur 4 gezeigten Ausgestaltung berührt dagegen die Schraube 4 die Nutwand. Dadurch furcht sich die Schraube 4 selbsttätig in die Nutwandung ein und ergibt so eine erhöhte Festigkeit.

Der lichte Abstand des zweiten Paares der Leisten 6 kann auch geringer sein als der des ersten Paares 5. Dadurch ist sichergestellt, daß die Leisten 5, 6 jeweils von den ihnen zugeordneten Bereichen der Schraube 4 umgeformt werden, sofern auch die Schraube einen abgestuften Durchmesser aufweist.

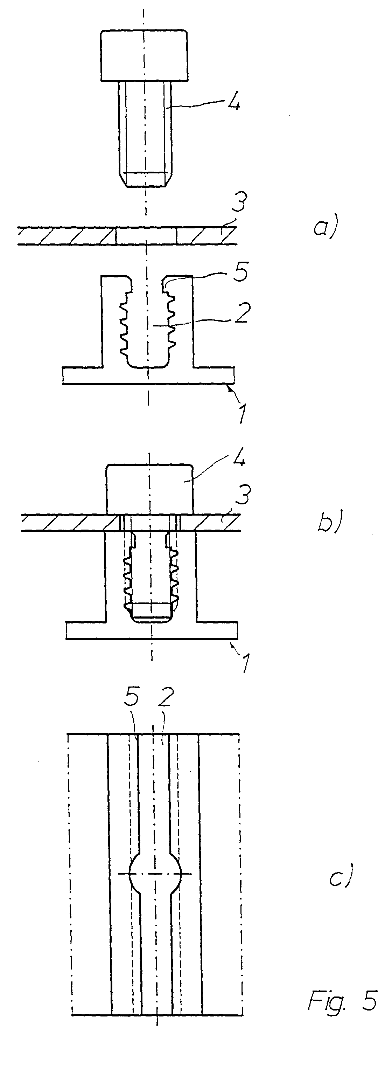

In Fig. 5 ist noch eine Ausführungsform angedeutet, bei der die Nutwand bereits eine Verzahnung aufweist, in die die Schraube mit ihrem Gewinde eintreten kann.

## Patentansprüche

1. Profilelement und Schraube (4) enthaltende Montageanordnung zum Aufbau von Türrahmen, Fensterrahmen, Fassadenkonstruktionen in Pfosten-/Riegelbauweise und dergleichen, wobei dieses Profilelement zur Bildung von wahlweise zu schaffenden Einschrauböffnungen für in einen Schraubkanal einzudrehende Befestigungsschrauben in Form von vorzugweise selbstschneidenden bzw. gewindefurchenden Schrauben (4) mit den Schraubkanal seitlich begrenzenden Nutwänden versehen ist und an beiden Nutwänden im Bereich der Nutöffnung zwei vorstehende, paarweise einander zugeordnete, die lichte Öffnungsbreite verengende Leisten (5) angeordnet sind, die beim Eindrehen der Schraube (4) zur Schaffung der Einschrauböffnung im Einschraubbereich unter Bildung je einer Umschlingungsbereich umgeformt werden, wobei der Umschlingungsbereich einen Teilbereich der Mantelfläche der Schraube (4) formschlüssig umgreift und wobei mit Abstand vom Nutboden ein zweites Paar von Leisten (6) angeordnet ist.

2. Montageanordnung nach Anspruch 1, **dadurch gekennzeichnet, daß** der lichte Abstand des zweiten Paares der Leisten (6) geringer ist als der des ersten Paares.

3. Montageanordnung nach Anspruch 1 oder 2, **dadurch gekennzeichnet, daß** die Leisten (6) an ihrer in Einschraubrichtung der Schraube (4) vorderen Kante in der Art einer Phase abgeschrägt sind.

4. Montageanordnung nach einem der Ansprüche 1 bis 3, **dadurch gekennzeichnet, daß** der Abstand der Nutwände größer als der Durchmesser der Schraube (4) ist.

5. Profilelement und Schraube (4) enthaltende Montageanordnung zum Aufbau von Türrahmen, Fensterrahmen, Fassadenkonstruktionen in Pfosten-/Riegelbauweise und dergleichen, wobei dieses Profilelement zur Bildung von wahlweise zu schaffenden Einschrauböffnungen für in einen Schraubkanal einzudrehende Befestigungsschrauben in Form von gewindefurchenden Schrauben (4) mit den Schraubkanal seitlich begrenzenden Nutwänden versehen ist und an beiden Nutwänden im Bereich der Nutöffnung zwei vorstehende, paarweise einander zugeordnete, die lichte Öffnungsbreite verengende Leisten (5) angeordnet sind, die beim Eindrehen der Schraube (4) zur Schaffung der Einschrauböffnung im Einschraubbereich unter Bildung je einer Umschlingungsbereich umgeformt werden, wobei der Umschlingungsbereich einen Teilbereich der Mantelfläche der Schraube (4) formschlüssig umgreift und wobei der Abstand der Nutwände dem Kerndurchmesser der Schraube (4) entspricht.

6. Montageanordnung nach einem der Ansprüche 3 bis 5, **dadurch gekennzeichnet, daß** die Aufnahmenut (2) im Bereich ihres Nutbodens eine verringerte Breite zum Eindrehen einer endseitig konisch ausgebildeten Schraube aufweist.

## Claims

1. Assembly fixture containing a profile element and screw (4), for putting together door frames, window frames, post-and-rail façade constructions and the like, said profile element being provided with slotted walls which laterally delimit a screw-in channel so as to form screw-in apertures to be created, as needed, for fixing screws in the form of preferably self-tapping or thread-cutting screws (4) to be tightened into the screw-in channel, and disposed on both slotted walls in the region of the slotted opening there being two protruding rails (5), arranged in pairwise association with one another and constricting the widthwise opening clearance, which rails are re-shaped in the screwing-in zone when the screw (4) is tightened in order to create the screw-in aperture, thereby forming a respective wrap-around zone, the wrap-around zone engaging in a positive fit around part of the surface area of the screw (4), and a second pair of rails (6) being disposed away from the slotted floor.

2. Assembly fixture according to claim 1, **characterised in that** the clearance between the second pair of rails (6) is smaller than that between the first pair.

3. Assembly fixture according to claim 1 or 2, **characterised in that** the rails (6) are chamfered in a phased manner along their front edge, viewed in the direction in which the screw (4) is screwed in.

4. Assembly fixture according to any of claims 1 to 3, **characterised in that** the distance between the slotted walls is greater than the diameter of the screw (4).

5. Assembly fixture containing a profile element and screw (4), for putting together door frames, window frames, post-and-rail façade constructions and the like, said profile element being provided with slotted walls which laterally delimit a screw-in channel so as to form screw-in apertures to be created, as needed, for fixing screws in the form of thread-cutting screws (4) to be tightened into the screw-in channel, and disposed on both slotted walls in the region of the slotted opening there being two protruding rails (5), arranged in pairwise association with one another and constricting the widthwise opening clearance, which rails are re-shaped in the screwing-in zone when the screw (4) is tightened in order to create the screw-in aperture, thereby forming a respective wrap-around zone, the wrap-around zone engaging in a positive fit around part of the surface area of the screw (4), and the distance between the slotted walls corresponding to the core diameter of the screw (4).

6. Assembly fixture according to any of claims 3 to 5, **characterised in that** in the region of its floor the locating slot (2) has a reduced width for tightening a screw that is cone-shaped at the end.

## Revendications

1. Agencement de montage comprenant un élément profilé et une vis (4) pour construire des cadres de portes, des cadres de fenêtres, des structures de façades du type à montants et traverses, et similaires, ledit élément profilé, pour former de manière sélective des ouvertures de vissage pour des vis de fixation à visser dans un canal à vis, sous la forme de préférence de vis (4) auto-taraudeuses, étant pourvu de parois qui délimitent latéralement le canal à vis, deux cloisons (5) associées par paire, qui font saillie dans la région de l'ouverture de la rainure et rétrécissent son ouverture libre étant disposées sur les deux parois de la rainure, lesquelles cloisons, lors du vissage de la vis (4), sont déformées dans la zone de vissage pour former une zone de contact, la zone de contact entourant avec complémentarité de formes une partie de la surface extérieure de la vis (4), et une deuxième paire de cloisons (6) étant disposée à distance du fond de rainure.

2. Agencement de montage selon la revendication 1, **caractérisé en ce que** l'ouverture libre de la deuxième paire de cloisons (6) est inférieure à celle de la première paire de cloisons.

3. Agencement de montage selon la revendication 1 ou 2, **caractérisé en ce que** les cloisons (6), au niveau de leur bord antérieur, vu dans la direction de vissage de la vis (4), sont pourvues d'un pan incliné à la manière d'un chanfrein.

4. Agencement de montage selon une des revendications 1 à 3, **caractérisé en ce que** l'espacement des cloisons de rainure est supérieur au diamètre de la vis (4).

5. Agencement de montage comprenant un élément profilé et une vis (4) pour construire des cadres de portes, des cadres de fenêtres, des structures de façades du type à montants et traverses, et similaires, ledit élément profilé, pour former de manière sélective des ouvertures de vissage pour des vis de fixation à visser dans un canal à vis, sous la forme de préférence de vis (4) auto-taraudeuses, étant pourvu de parois qui délimitent latéralement le canal à vis, deux cloisons (5), associées par paire, qui rétrécissent l'ouverture libre étant disposées sur les deux parois de la rainure, lesquelles cloisons, lors du vissage de la vis (4) sont déformées dans la zone de vissage pour former une zone de contact, la zone de contact entourant avec complémentarité de formes une partie de la surface extérieure de la vis (4), et l'espacement des parois de rainure correspondant au diamètre à fond de filet de la vis (4).

6. Agencement de montage selon une des revendications 3 à 5, **caractérisé en ce que** la rainure (2), dans la région de son fond, présente une largeur réduite pour le vissage d'une vis à extrémité conique.
